(19) Europäisches Patentamt
European Patent Office
Office européen des brevets

(11) EP 4 075 541 A1

(12) **EUROPEAN PATENT APPLICATION**
published in accordance with Art. 153(4) EPC

(43) Date of publication:
**19.10.2022 Bulletin 2022/42**

(21) Application number: **20900472.0**

(22) Date of filing: **01.12.2020**

(51) International Patent Classification (IPC):
***H01M 4/133*** *(2010.01)* ***H01M 4/36*** *(2006.01)*
***H01M 4/38*** *(2006.01)* ***H01M 4/587*** *(2010.01)*
***H01M 10/052*** *(2010.01)* ***H01M 10/0567*** *(2010.01)*

(52) Cooperative Patent Classification (CPC):
**H01M 4/133; H01M 4/36; H01M 4/38; H01M 4/587; H01M 10/052; H01M 10/0567;** Y02E 60/10

(86) International application number:
**PCT/JP2020/044688**

(87) International publication number:
**WO 2021/117550 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2019 JP 2019225915**

(71) Applicant: **Panasonic Intellectual Property Management Co., Ltd.**
**Osaka-shi, Osaka 540-6207 (JP)**

(72) Inventors:
- **FUJITOMO, Chisaki**
  **Chuo-ku, Osaka-shi, Osaka 540-6207 (JP)**
- **ISHIGURO, Tasuku**
  **Chuo-ku, Osaka-shi, Osaka 540-6207 (JP)**

(74) Representative: **Novagraaf International SA**
**Chemin de l'Echo 3**
**1213 Onex, Geneva (CH)**

(54) **NON-AQUEOUS ELECTROLYTE SECONDARY BATTERY**

(57) A nonaqueous electrolyte secondary battery includes a positive electrode, a negative electrode, and a nonaqueous electrolyte, wherein the negative electrode includes a negative electrode current collector and a negative electrode active material layer supported by the negative electrode current collector, when dividing the negative electrode active material layer into two layers of a first region and a second region having the same thickness, the second region is closer to the negative electrode current collector than the first region, the first region and the second region each contains graphite particles, a ratio P1/P2 of interparticle porosity PI of the first region to interparticle porosity P2 of the second region is greater than 1, and the nonaqueous electrolyte includes at least one additive selected from the group consisting of a sulfite compound and a sulfate compound.

[FIG. 1]

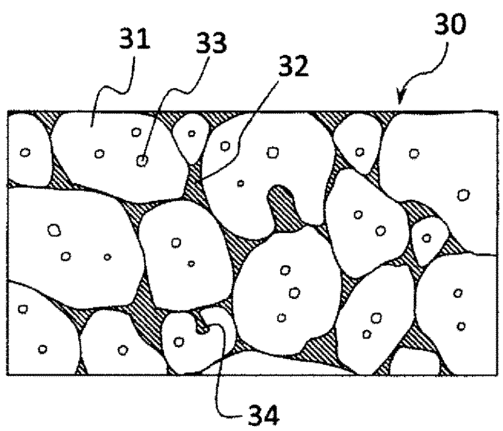


EP 4 075 541 A1

## Description

[Technical Field]

The present disclosure relates to a nonaqueous electrolyte secondary battery.

[Background Art]

Nonaqueous electrolyte secondary batteries, in particular, lithium-ion secondary batteries have high voltages and high energy densities, and are widely used as power sources for small electronic devices such as portable devices. The nonaqueous electrolyte secondary battery includes a positive electrode, a negative electrode, and a nonaqueous electrolyte. The negative electrode generally includes a negative electrode current collector and a negative electrode active material layer supported by the negative electrode current collector.

Meanwhile, Patent Literature 1 has proposed, as a method of improving the flowability of the nonaqueous electrolyte to the negative electrode active material layer, increasing the porosity of the negative electrode active material layer at the negative electrode surface side than at the negative electrode current collector side (for example, PL 1).

[Citation List]

[Patent Literature]

Patent Literature 1: Japanese Laid-open Patent Publication 2015-037008

[Summary of Invention]

However, in the negative electrode active material layer having a higher porosity at the negative electrode surface side than at the negative electrode current collector side, the negative electrode active material and the nonaqueous electrolyte tend to come into contact with each other to cause side reactions, and the nonaqueous electrolyte is easily decomposed on the particle surface of the negative electrode active material to form a coating. Further, during charging and discharging, the above coating is broken together with the expansion and contraction, and the particle cracking of the negative electrode active material, the active surface of the negative electrode active material is exposed and contacted with the nonaqueous electrolyte, and the coating formation by decomposition of the nonaqueous electrolyte at the active surface proceeds. As the coating is formed, the negative electrode resistance tends to increase and the capacity tends to decrease at the initial stage of cycle.

In view of the above, one aspect of the present disclosure relates to a nonaqueous electrolyte secondary battery including a positive electrode, a negative electrode, and a nonaqueous electrolyte, wherein the negative electrode includes a negative electrode current collector and a negative electrode active material layer supported by the negative electrode current collector; when the negative electrode active material layer is divided into two layers having the same thickness of a first region and a second region, the second region is closer to the negative electrode current collector than the first region; the first region and the second region each includes graphite particles; a ratio P1/P2 of interparticle porosity PI of the first region relative to interparticle porosity P2 of the second region is greater than 1; and the nonaqueous electrolyte includes at least one additive selected from the group consisting of a sulfite compound and a sulfate compound.

According to the present disclosure, a nonaqueous electrolyte secondary battery excellent in initial cycle characteristics can be obtained.

[Brief Description of Drawings]

[FIG. 1] FIG. 1 is a diagram schematically illustrating a cross section of a negative electrode active material layer in a nonaqueous electrolyte secondary battery according to an embodiment of the present disclosure.

[FIG. 2] FIG. 2 is a diagram schematically showing a cross section of graphite particles used in the nonaqueous electrolyte secondary battery according to an embodiment of the present disclosure.

[FIG.3] FIG. 3 is a schematic perspective partially cutaway view of the nonaqueous electrolyte secondary battery according to an embodiment of the present disclosure.

[FIG.4] FIG. 4 is a diagram schematically showing a cross section of the negative electrode used in the nonaqueous electrolyte secondary battery of FIG. 3.

[Description of Embodiments]

A nonaqueous electrolyte secondary battery according to an embodiment of the present disclosure includes a positive electrode, a negative electrode, and a nonaqueous electrolyte.

The negative electrode includes a negative electrode current collector, and a negative electrode active material layer supported by the negative electrode current collector. When the negative electrode active material layer is divided into two layers of a first region and a second region having the same thickness, the second region is closer to the negative electrode current collector than the first region, and the first region and the second region each contains graphite particles as a negative electrode active material. The ratio P1/P2 of the interparticle porosity PI of first region to the interparticle porosity P2 of second region is greater than 1. The nonaqueous electrolyte includes at least one additive selected from the group consisting of a sulfite compound and a sulfate compound.

By using the negative electrode active material layer having a larger interparticle porosity at the first region (upper layer) than the second region (i.e., lower layer relative to current collector), the flowability of the nonaqueous electrolyte to the negative electrode active material layer improves. The improvement in flowability facilitates the progress of the battery reaction, and improves, for example, the high rate characteristics (for example, the cycle characteristics when charging is performed at a high rate).

The above additive may form a low-resistance and stable coating (solid-electrolyte interphase) on the surface of the negative electrode active material. Since the above additive has a relatively high reduction potential, a low-resistance coating derived from the additive is preferentially formed on the surface of the negative electrode active material layer (particularly, an upper layer thereof), in which the negative electrode active material and the nonaqueous electrolyte are easily contacted at the initial stage of the cycle.

In addition, the coating derived from the additive has excellent durability (strength) and is also excellent in followability (flexibility) against expansion and contraction of the negative electrode active material. Therefore, the breakage of the coating due to expansion/contraction and particle cracking of the negative electrode active material during charging and discharging is suppressed. By suppressing the breakage of the coating, the exposure of the active surface of the negative electrode active material is suppressed, and the contact between the active surface and the nonaqueous electrolyte and the accompanying excessive coating formation (restoration of the coating) are suppressed.

Based on the above, the reduction in capacity in initial cycles due to the increase in negative electrode resistance associated with coating formation is suppressed. Initial cycles may range, for example, from several cycles or more to 30 cycles or less. In addition, repeated breakage and restoration of the coating due to repetition of charging and discharging are suppressed, and the mid-cycle characteristics are also improved. The mid-cycle ranges, for example, from more than 30 cycles to 300 cycles or less.

In view of forming a good quality coating, the nonaqueous electrolyte may include vinylene carbonate (VC), fluoroethylene carbonate (FEC), and the like together with the additive described above.

Generally, some components of the nonaqueous electrolyte are utilized for early coating formation and also for restoration of the broken coating with repeated charge and discharge. Examples of such components include VC and FEC. However, when breakage of the coating due to expansion and contraction of the negative electrode active material tends to occur, the amount of components utilized for restoration of the coating increases and the coating resistance increases, and the initial cycle characteristics may decrease.

On the other hand, in the present disclosure, the above additive is included in the nonaqueous electrolyte. Since the additive has a higher reduction potential, a coating derived from the additive is preferentially formed. Coatings derived from other components are mainly formed on top of the coatings derived from the additive and may function as part of the coatings. Since the coating derived from the additive is hard to be destroyed, the restoration of the coating by other components is suppressed, and the decrease in the initial cycle characteristics due to the increase in the coating resistance accompanying the restoration of the coating is suppressed.

As the additive of the nonaqueous electrolyte, at least one of a sulfite compound and a sulfate compound is used. The sulfite compound is an organic compound (sulfite diester compound) having a structure of -O-S (= O)-O- in the molecule. The sulfate compound is an organic compound (sulfate diester compound) having a structure of -O-S (= $O)_2$-O- in its molecule. The molecular structure of the sulfite compound and the sulfate compound may be chain or cyclic.

The additive is, for example, a compound represented by R-A-R'. A is -O-S(=O)-O- or -O-S$(=O)_2$-O-. R, R' are each independently a hydrocarbon group. R and R' may be bonded to form a ring. The hydrocarbon group includes an alkyl group, an alkenyl group, an aryl group, and the like. The hydrocarbon group may be linear or branched. The alkyl group includes a methyl group, an ethyl group, a n-propyl group, an isopropyl group, and the like. The alkenyl group includes a vinyl group, a 1-propenyl group, a 2-propenyl group, and the like. The aryl group includes a phenyl group, a benzyl group, and the like. At least one of the hydrogen atoms of the hydrocarbon group may be substituted with a halogen atom or the like. In view of ensuring good viscosity and improving solubility of the nonaqueous electrolyte, the hydrocarbon group is preferably an alkyl group having 1 to 5 carbon atoms, and more preferably an alkyl group having 1 to 3 carbon atoms.

Examples of the cyclic sulfite compound include the compound represented by General Formula (1) below:

[Chem. 1]

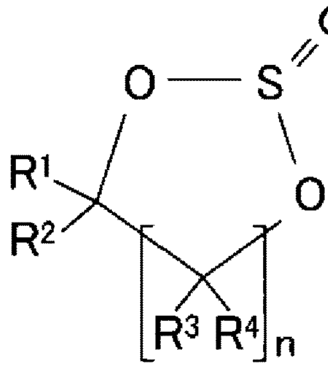

(1)

$R^1$ to $R^4$ in General Formula (1) are each independently a hydrogen atom or a substituent. The substituent includes a halogen atom, a hydrocarbon group, a hydroxyl group, an amino group, an ester group, and the like.

The hydrocarbon group includes an alkyl group and an alkenyl group, and the like. The alkyl group and the alkenyl group may be linear or branched. The alkyl group includes a methyl group, an ethyl group, a n-propyl group, an isopropyl group, and the like. The alkenyl group includes a vinyl group, a 1-propenyl group, a 2-propenyl group, and the like. At least one of the hydrogen atoms of the hydrocarbon group may be substituted with a halogen atom or the like. In view of ensuring good viscosity and improving solubility of the nonaqueous electrolyte, the hydrocarbon group is preferably an alkyl group having 1 to 5 carbon atoms, and more preferably an alkyl group having 1 to 3 carbon atoms.

In General Formula (1), n indicates the repeating number of methylene groups having $R^3$ and $R^4$. "n" is an integer of 1 to 3. When n is 2 or 3, $R^3$ and $R^4$ of each methylene group may be the same or different.

Specific examples of the compound represented by General Formula (1) include ethylene sulfite (ES), 1,3-propylenesulfite, 1,2-propylenesulfite, 1,3-butylenesulfite, 1,2-butylenesulfite, 1,2-pentenesulphite, fluoro ethylene sulfite, 1,2-difluoro ethylene sulfite, and vinyl ethylene sulfite.

Examples of the chain sulfite compound include diethyl sulfite, dimethyl sulfite, dipropyl sulfite, dibutyl sulfite, dipropargyl sulfite, bis(fluoroethyl)sulfite, bis(difluoroethyl)sulfite, bis(trifluoroethyl)sulfite, bis(trimethylsilyl)sulfite, and bis(2-propenyl)sulfite.

In view of improving initial cycle characteristics and high rate characteristics, among them, the sulfite compound is preferably ES. With ES, steric hindrance in the molecule occurs less, and the reaction of ES-derived coating formation proceed smoothly on the negative electrode active material surface. Further, ES is also advantageous for an ES-derived coating formation in that the reduction potential is suitably high and the viscosity is suitably low. A kind of sulfite compound may be used singly, or two or more kinds may be used in combination.

Examples of the cyclic sulfate compound include a compound represented by General Formula (2) below:

[Chem. 2]

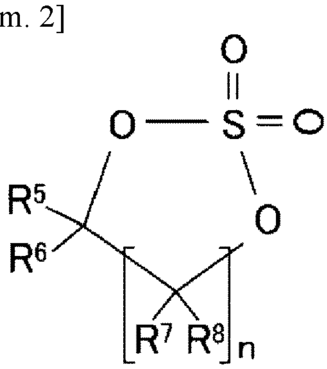

(2)

$R^5$ to $R^8$ and n in General Formula (2) are the same as $R^1$ to $R^4$ and n in General Formula (1).

Specific examples of the compound represented by General Formula (2) include ethylene sulfate (DTD), 1,3-propylenesulfate, 1,2-propylenesulfate, 1,3-butylenesulfate, 1,2-butylenesulfate, 1,2-pentenesulfate, fluoro ethylene sulfate, 1,2-difluoro ethylene sulfate, and vinyl ethylene sulfate.

Examples of the chain sulfate compound include diethyl sulfate, dimethyl sulfate, dipropyl sulfate, dibutyl sulfate,

dipropargyl sulfate, bis(fluoroethyl) sulfate, bis(difluoroethyl) sulfate, bis(trifluoroethyl) sulfate, bis(trimethylsilyl) sulfate, and bis(2-propenyl) sulfate.

In view of improving the initial cycle characteristics and the high rate characteristics, among them, the sulfate compound is preferably DTD. With DTD, steric hindrance in the molecule occurs less, and the reaction of DTD-derived coating formation proceed smoothly on the negative electrode active material surface. Further, DTD is also advantageous for a DTD-derived coating formation in that the reduction potential is suitably high and the viscosity is suitably low. A kind of sulfate compound may be used singly, or two or more kinds may be used in combination.

The content (mass ratio relative to the entire nonaqueous electrolyte) of the above additive in the nonaqueous electrolyte is preferably 2 mass% or less, more preferably 0.5 mass% or more and 2 mass% or less, and still more preferably 0.5 mass% or more and 1.5 mass% or less. Preferably, the content of the additive in the nonaqueous electrolyte is within the above range prior to the first charge of the battery (or prior to injection into the battery). When the content of the additive in the nonaqueous electrolyte is 2 mass% or less, a coating derived from the additive tends to be suitably formed, and the coating resistivity tends to be reduced. In addition, the viscosity of the nonaqueous electrolyte can be easily adjusted to a suitable viscosity when the content of the additive is 2 mass% or less. When the content of the additive in the nonaqueous electrolyte is 0.5 mass% or more, a coating derived from the additive tends to be sufficiently formed. The content of the additive in the nonaqueous electrolyte is determined, for example, by gas chromatography-mass spectrometry (GC/MS).

In the course of charging and discharging, at least a portion of the additive decomposes and is utilized for forming a coating. Therefore, in a battery after charging and discharging (for example, a battery in an initial period, after charging and discharging several times), the content of the additive in the nonaqueous electrolyte may be less than 2 mass%. When the content of the additive in the preparation of the nonaqueous electrolyte is 2 mass% or less, the content of the additive in the nonaqueous electrolyte, for example, in a battery after initial charge (e.g., a commercially available battery), may be, for example, 100 ppm or less. The content of the additive contained in the nonaqueous electrolyte removed from the battery may be a trace amount close to the detection limit. If the presence of the additive can be confirmed, corresponding improvement effects in the initial cycle characteristics and high rate characteristics can be observed.

The ratio P1/P2 of interparticle porosity PI of the first region relative to interparticle porosity P2 of the second region is greater than 1. By increasing the interparticle porosity in the first region than in the second region, the flowability of the nonaqueous electrolyte to the negative electrode active material layer is improved, and the utilization rate of the negative electrode active material in the negative electrode active material layer is increased, and particularly, the high rate characteristics are easily improved. Reducing the interparticle porosity in the second region rather than in the first region enhances the adhesion between the negative electrode active material layer and the negative electrode current collector, and suppresses the deterioration of the cycle characteristics due to the deterioration of the adhesion between the negative electrode active material layer and the negative electrode current collector.

Here, the interparticle porosity PI of the first region means a ratio of an area SP1 of voids between the negative electrode active material particles in the first region relative to an area SA1 of the first region in a cross section of the first region (cross section in the thickness direction of the negative electrode active material layer), and is determined by $(SP1/SA1) \times 100$. The area SA1 of the first region means an area obtained by combining the voids between the negative electrode active material particles and the negative electrode active material particles in the first region.

The interparticle porosity P2 of the second region means a ratio of an area SP2 of voids between the negative electrode active material particles in the second region relative to an area SA2 of the second region in a cross section of the second region (cross section in the thickness direction of the negative electrode active material layer), and is determined by $(SP2/SA2) \times 100$. The area SA2 of the second region means an area obtained by combining the voids between the negative electrode active material particles and the negative electrode active material particles in the second region.

The negative electrode active material particles of the first region and the second region include at least graphite particles, and may further include Si-based particles. When the first region and the second region contain other components (such as binders) other than the negative electrode active material particles, the other components are in very small amounts relative to the negative electrode active material particles and are negligible.

P1/P2 is preferably 1.1 or more and 2.0 or less, more preferably 1.1 or more and 1.5 or less. When P1/P2 is 1.1 or more, the high rate characteristics are easily improved. When P1/P2 is 2.0 or less, it is advantageous in terms of strength of the negative electrode active material layer (negative electrode surface side) and securing negative electrode capacity (filling amount of negative electrode active material). The first region ensures sufficient contacts between the negative electrode active material particles and sufficient conductive networks between the negative electrode active material particles.

The above P1/P2 can be obtained, for example, by the following method.

After the initial cycle, the battery (e.g., a battery charged and discharged several times to several tens of times) is disassembled, a part of the negative electrode is cut off, and a sample cross section of the negative electrode active

material layer is obtained using an ion milling device or the like. For the ion milling apparatus, for example, the apparatus name "IM4000PLUS" manufactured by Hitachi High-Tech Corporation can be used. Using a scanning electron microscope (SEM), a reflected electron image of the sample cross section (magnification: 800 times) is taken to obtain a cross-sectional image of the sample. The cross-sectional images of the sample obtained above are put in a computer and divided into the first region and the second region. The cross-sectional images of the first region and the second region are binarized.

For the binarization process of the cross-sectional images of the sample, for example, the image analysis software "ImageJ" manufactured by the National Institutes of Health of the United States can be used. In the binarization process, in the cross-sectional image of the sample, the negative electrode active material particles (including internal voids of particles) are represented by white, and voids between the particles (including external voids of particles) are represented by black. When the negative electrode active material particles have minute voids with a maximum diameter of 3 $\mu$m or less, it may be difficult to distinguish either the internal voids or the external voids in the image analysis, and therefore, the voids with a maximum diameter of 3 $\mu$m or less are regarded as the internal voids. The components other than the negative electrode active material particles (such as SBR and CMC), are also represented in white, but in very small amounts and at negligible levels.

Here, FIG. 1 is a diagram schematically illustrating a cross section of a negative electrode active material layer in a nonaqueous electrolyte secondary battery according to an embodiment of the present disclosure, in which a part of the cross section of the thickness direction of the negative electrode active material layer is enlarged.

The negative electrode active material layer 30 has negative electrode active material particles 31 and voids 32 between the negative electrode active material particles 31. By the binarization process, the negative electrode active material particles 31 are represented by white, and the voids 32 (hatched portion of FIG.1) are represented by black. When the negative electrode active material particles 31 are graphite particles, the negative electrode active material particles 31 may have voids (internal voids 33) closed in the particles 31. The inner void 33 is regarded as a part of the negative electrode active material particles 31 and is represented in white by the binarization process. Further, the negative electrode active material particles 31 may have a void (external void 34) connected to an external space of the particles 31. The external void 34 is regarded as a part of the void between the particles 31, and is represented by black by a binarization process.

Using the binarized cross-sectional images of the first region, the area SW1 represented by white and the area SB1 represented by black in the first region are determined. The sum of the area SW1 and the area SB1 is defined as the area SA1 of the first region. The area SB1 is defined as the area SP1 of the void in the first region.

Using the binarized cross-sectional images of the second region, the area SW2 represented by white and the area SB2 represented by black in the second region are determined. The sum of the area SW2 and the area SB2 is defined as the area SA2 of the second region. The area SB2 is defined as the area SP2 of the void in the second region.

Using the area SA1 of the first region, the area SP1 of the void in the first region, the area SA2 of the second region, and the area SP2 of the void in the second region, P1/P2 is obtained from the following equation.

$$P1/P2=(SP1/SA1)/(SP2/SA2)$$

In view of a higher capacity, the ratio D1/D2 of the packing density D1 of the first region to the packing density D2 of the second region is preferably 0.9 or more and 1.1 or less. Here, the packing density D1 of the first region means the mass per unit volume of the first region. The packing density D2 of the second region means the mass per unit volume of the second region.

In view of a higher capacity, the first region and the second region preferably have a packing density of 1.3 $g/cm^3$ or more and 2.0 $g/cm^3$ or less.

The packing density D1 of the first region and the packing density D2 of the second region can be determined by the method below.

Using the cross-sectional images of the sample obtained in the process of obtaining the interparticle porosity, the thickness T of the negative electrode active material layer is obtained, and T/2 is defined as the thickness of the first region and the thickness of the second region. A part of the negative electrode, in which the negative electrode active material layer is supported by the sheet-form negative electrode current collector is cut off, the first region is scraped off from the negative electrode, and the mass W2 and the area A2 of the second region remaining on the negative electrode current collector are determined. The area A2 is the area of the second region when the second region is viewed from its thickness direction. Using the mass W2, the area A2, and the thickness T/2 of the second region, the packing density D2 ($g/cm^3$) of the second region is calculated from the following equation.

$$\text{Second region packing density } D2=W2/(A2 \times T/2)$$

Separately, a portion of the negative electrode is cut off, an adhesive tape is stuck on top of the negative electrode active material layer (first region), and the negative electrode active material layer is peeled off from the sheet-form negative electrode current collector. The second region of the negative electrode active material layer transferred to the adhesive tape is scraped off, and the mass W1 and the area A1 of the first region left on the tape are determined. The area A1 is the area of the first region when the first region is viewed from its thickness direction. Using the mass W1, the area A1 and the thickness T/2 of the first region, the packing density D1 (g/cm$^3$) of the first region is calculated from the following equation.

$$\text{First region packing density } D1=W1/(A1 \times T/2)$$

In view of easily improving the cycle characteristics and the high rate characteristics, it is preferable that the graphite particles include graphite particles A having the inner porosity of 5% or less and graphite particles B having the inner porosity of above 5%, and that the graphite particles A are contained more in the first region than in the second region. In this instance, it is easy to make P1/P2 larger than 1 while suppressing the reduction in the packing density of the first region. The ratio WC2/WC1 of content WC2 of graphite particles A of the second region to content WC1 of graphite particles A of the first region is preferably 0 or more and less than 1. WC2/WC1 may be 0 or more and 0.75 or less or may be 0 or more and 0.5 or less.

The inner porosity of the graphite particles A may be 1% or more and 5% or less or may be 3% or more and 5% or less. The inner porosity of the graphite particles B may be 8% or more and 20% or less, or may be 12% or more and 18% or less. When the internal porosities of the graphite particles A and the graphite particles B are in the above range, the initial cycle characteristics and the high rate characteristics are easily improved, which is advantageous for increasing the capacity.

FIG. 2 is a diagram schematically showing a cross section of graphite particles used in a nonaqueous electrolyte secondary battery according to an embodiment of the present disclosure.

The graphite particle 20 has an internal space 21 closed inside the graphite particle 20 and an outer space 22 connected to a space outside the graphite particle 20. The external void 22 is contained in the void between the negative electrode active material particles in the negative electrode active material layer.

Here, the inner porosity of the graphite particles 20 means the ratio of the area SC2 of the internal voids 21 to the area SC1 of the graphite particles 20 in the cross section of the graphite particles 20, and is obtained by (SC2/SC1) $\times$ 100. The area SC1 of the graphite particles 20 is the area of the region surrounded by the outer periphery of the graphite particles 20, and means the area obtained by combining the hatched portions in FIG. 2 and the inner voids 21. When there are a plurality of internal voids 21, the area SC2 of the internal voids 21 means the total area of the plurality of internal voids 21.

By including more dense graphite particles A in the particles in the first region than in the second region, the interparticle porosity can be increased in the first region than in the second region. For example, the same amount of graphite particles may be included in the first region and the second region, and the ratio of the graphite particles A to the graphite particles may be set to be larger than that of second region. Since the graphite particles A have a high density in the particles, it is possible to suppress a decrease in packing density while increasing the porosity between particles in the first region. For example, the above D1/D2 can be controlled within the range of 0.9 or more and 1.1 or less, and a high packing density of 1.3 g/cm$^3$ or more and 2.0 g/cm$^3$ or less can be obtained in both the first region and the second region.

The graphite particles A may be contained in the first region and the second region, or may be contained only in the first region. The graphite particles B may be contained in the first region and the second region, or may be contained only in the second region. In view of volumetric balance in the negative electrode active material layer, it is preferable that the mass obtained by summing up the graphite particles A and the graphite particles B contained in the first region is substantially the same as the mass obtained by summing up the first region and the second region contained in the second region.

In the first region, the ratio of the graphite particles A relative to the sum of the graphite particles A and the graphite particles B is preferably 20 mass% or more and 100 mass% or less, more preferably 50 mass% or more and 100 mass% or less. In the second region, the ratio of the graphite particles B relative to the sum of the graphite particles A and graphite particles B is preferably 90 mass% or more and 100 mass% or less, more preferably 100 mass%.

The inner porosity of the graphite particles can be obtained, for example, by the following method.

The batteries in an initial stage (unused batteries or batteries charged and discharged several times) are

disassembled, the negative electrode is removed, a portion of the negative electrode is sampled, and a sample cross-section of the negative electrode active material layer is obtained using an ion milling apparatus or the like. For the ion milling apparatus, for example, the apparatus name "IM4000PLUS" manufactured by Hitachi High-Tech Corporation can be used. A plurality of graphite particles may be embedded in an epoxy resin or the like and polished to obtain a cross section of the plurality of graphite particles, which may be used as a sample cross section. A scanning electron microscope (SEM) is used to take a reflected electron image (magnification: 3000 times to 5000 times) of the cross section of the sample to obtain a cross-sectional image of the sample. The cross-sectional image of the sample obtained as described above is put in a computer, and binarization processing is performed. For the binarization process of the cross-sectional images of the sample, for example, the image analysis software "ImageJ" manufactured by the National Institutes of Health of the United States can be used. In the binarization process, in the cross-sectional images, the negative electrode active material particles (including internal voids of the particles) are represented by black, and voids between the particles are represented by white.

The graphite particles with a largest diameter of 5 μm or more and 50 μm or less are selected arbitrarily using the binarized cross-sectional images. The area SC1 of the graphite particles and the area SC2 of the inner voids of the graphite particles are calculated. Those minute voids with a maximum diameter of 3 μm or less may be difficult to distinguish if they are the internal voids or the external voids in the image analysis. Therefore, the voids with a maximum diameter of 3 μm or less are regarded as the internal voids. When the negative electrode active material particles include graphite particles and Si-based particles, the graphite particles can be distinguished from the Si-based particles by using the SEM image (reflected electron image) of the cross section of the sample obtained above. In the SEM images of the sample cross-section, the graphite particles have a black color, and the Si-based particles ($SiO_x$ particles, etc.) have a gray color.

Using the area SC1 of the graphite particles obtained above and the area SC2 of the internal voids, the inner porosity (%) of the graphite particles is calculated from the following equation.

$$\text{Internal porosity of graphite particles} = (SC2/SC1) \times 100$$

Those graphite particles having the inner porosity of 5% or less are referred to as graphite particles A, and those graphite particles having the inner porosity of more than 5% are referred to as graphite particles B. The average value of the inner porosity of 10 graphite particles A is obtained. The average value of the inner porosity of 10 graphite particles B is obtained.

The graphite particles A can be produced, for example, by the method below.

Coke (precursor) as a main raw material is pulverized, a binder is added to the pulverized product, and the pulverized product is aggregated. The average particle size (D50) of the ground coke is, for example, 12 μm or more and 20 μm or less. In the present specification, the average particle size (D50) means a particle size (volume average particle size) having a volume integrated value of 50% in the particle size distribution measured by the laser diffraction scattering method. The resulting aggregates are calcined, graphitized, sieved to obtain graphite particles A of a desired size. The calcination temperature is, for example, 2600°C or more, or may be 2600°C or more and 3000°C or less.

The inner porosity of the graphite particles A can be controlled by, for example, the particle size of pulverized coke or aggregates. For example, when the inner porosity is to be reduced, the particle size of the pulverized coke or the aggregates may be increased. In addition, when a part of the binder contained in the aggregates volatilizes during calcination, the inner porosity may be controlled by the amount of the binder added. Pitches are exemplified as such binders.

The graphite particles B can be produced, for example, by the method below.

Coke (precursor) as a main raw material is pulverized, a binder is added to the pulverized product, and the pulverized product is aggregated. The average particle size (D50) of the pulverized coke is, for example, 12 μm or more and 20 μm or less. The resulting aggregates are pressure-molded to obtain a block molded product, which is calcined and graphitized. The calcination temperature is, for example, 2600°C or more, or may be 2600°C or more and 3000°C or less. The density of the molded product is, for example, 1.6 $g/cm^3$ or more and 1.9 $g/cm^3$ or less. The resulting block graphitized product is pulverized and sieved to obtain graphite particles B of a desired size.

The inner porosity of the graphite particles B may be controlled by the particle size or the like of the pulverized coke or the aggregates. When a volatile component is added to a block molded product during calcination, the inner porosity of the graphite particles B may be controlled by the amount of the volatile component added to the block molded product. When a part of the binder added to the pulverized product of coke volatilizes during calcination, the binder may also serve as a volatile component added to the molded body. In this case, the inner porosity may be controlled by the amount of the binder added. Pitches are exemplified as such binders. For example, graphite particles B having a larger inner porosity than graphite particles A may be produced by increasing the pitch amount to be added to the pulverized

product in the process of producing graphite particles B than the pitch amount to be added to the pulverized product in the process of producing graphite particles A.

An exemplary process for the preparation of a negative electrode with a negative electrode active material layer having a larger interparticle porosity in the first region than in the second region is shown in the following.

A first negative electrode slurry and a second negative electrode slurry are prepared. At this time, a larger amount of the graphite particles A may be contained in the first negative electrode slurry than in the second negative electrode slurry. The first negative electrode slurry may contain graphite particles A, and the second negative electrode slurry may contain graphite particles B. The second negative electrode slurry is used to form a second negative electrode active material layer, and the first negative electrode slurry is used to form a first negative electrode active material layer having a larger inner porosity than the second negative electrode active material layer. Specifically, the second negative electrode slurry is applied on the negative electrode current collector, the second coating film is dried, the first negative electrode slurry is applied on the second coating film, and the first coating film is dried. The laminate of the first coating film and the second coating film may be rolled after drying. In this way, the second negative electrode active material layer and the first negative electrode active material layer are formed on top of the negative electrode current collector in this order. The second coating film may be dried together with the first coating film after applying the first negative electrode slurry on the second coating film. The first negative electrode active material layer and the second negative electrode active material layer may have the same thickness. The value of P1/P2 may be controlled by changing the ratio T1/T2 of the thickness T1 of the first negative electrode active material layer to the thickness T2 of the second negative electrode active material layer.

Another illustration is shown below of how to fabricate a negative electrode with a negative electrode active material layer having a larger interparticle porosity in the first region than in the second region.

A negative electrode slurry is applied to the negative electrode current collector, the coating is dried, rolled at a second pressure, and a second negative electrode active material layer is formed. The same negative electrode slurry as described above is applied to the second negative electrode active material layer, the coating is dried, and rolled at a first pressure less than the second pressure. A first negative electrode active material layer having a larger interparticle porosity than the second negative electrode active material layer is formed on the second negative electrode active material layer. In this case, the packing density tends to be higher in the second negative electrode active material layer than in the first negative electrode active material layer.

The negative electrode active material layer may be configured by stacking a plurality of layers of three or more having a different interparticle porosity from each other so that the interparticle porosity is sequentially increased from the negative electrode current collector side toward the negative electrode surface side. Such a negative electrode active material layer can be formed, for example, by preparing three or more types of negative electrode slurry with a different content of graphite particles A, and applying the slurry to the negative electrode current collector in order from a negative electrode slurry having a small graphite particles A content. When such a negative electrode active material layer is divided into a first region and a second region, the interparticle porosity is larger in the first region than in the second region.

Next, a nonaqueous electrolyte secondary battery according to an embodiment of the present disclosure will be described in detail. The nonaqueous electrolyte secondary battery includes, for example, a negative electrode, a positive electrode, and a nonaqueous electrolyte described below.

[Negative Electrode]

The negative electrode includes a negative electrode current collector, and a negative electrode active material layer supported by the negative electrode current collector surface. The negative electrode active material layer can be formed, for example, by coating a negative electrode slurry in which a negative electrode mixture is dispersed in a dispersion medium on a surface of the negative electrode current collector and drying the slurry. The dried coating film may be rolled, if necessary. The negative electrode active material layer may be formed on one surface of a sheet-form negative electrode current collector or may be formed on both surfaces. The negative electrode mixture contains a negative electrode active material as an essential component, and may contain a binder, a conductive agent, a thickener, and the like as an optional component.

The negative electrode active material includes at least graphite particles. As the graphite particles, particles such as natural graphite and artificial graphite can be used. In view of easy control of the inner porosity, particles of artificial graphite are preferable. The graphite particles may partially include amorphous carbon, graphitizable carbon (soft carbon), and non-graphitizable carbon (hard carbon).

Graphite is a carbon material having a developed graphite-type crystal structure. d002 between the (002) planes of the graphite particles measured by X-ray diffractometry may be, for example, 0.340 nm or less, or 0.3354 nm or more and 0.340 nm or less. The crystallite size Lc(002) of the graphite particles measured by the X-ray diffraction method may be, for example, 5 nm or more, or may be 5 nm or more and 300 nm or less, or may be 10 nm or more and 200 nm or less. The crystallite size Lc(002) is measured by, for example, the Scherrer method. When the plane spacing

d002 and the crystallite sizes Lc(002) of the (002) planes of the graphite particles fall within the above ranges, a high capacity can be easily obtained.

The average particle size (D50) of the graphite particles is, for example, 1 μm or more and 30 μm or less. In the present specification, the average particle size (D50) means a particle size (volume average particle size) having a volume integrated value of 50% in the particle size distribution measured by the laser diffraction scattering method. For example, "LA-750" manufactured by Horiba Corporation can be used as the measuring device.

In view of increasing the capacity, the negative electrode active material may include Si-based particles. The Si-based particles are preferably contained in the first region and the second region. The average particle size (D50) of the Si-based particles is, for example, 1 μm or more and 25 μm or less. Examples of the Si-based particles include elemental silicon particles, alloy particles containing silicon, composite particles containing silicon, and the like. The alloy particles containing silicon include, for example, silicon (Si) and at least one element selected from the group consisting of tin (Sn), nickel (Ni), iron (Fe), copper (Cu), titanium (Ti), manganese (Mn), and aluminum (Al).

The silicon-containing composite particles may contain a lithium-ion conductive phase (matrix phase) and silicon particles (fine Si phase) dispersed in the matrix phase. Examples of the lithium ion conductive phase include a $SiO_2$ phase, a silicate phase (e.g., lithium silicate phase), a carbon phase, and the like.

The $SiO_2$ phase is an amorphous phase containing 95 mass% or more silicon dioxide. The $SiO_2$ phase absorbs lithium ions by initial charge, and a $Li_4SiO_4$ phase is easily formed. The composite particles in which the silicon particles are dispersed in the $SiO_2$ phase are represented by $SiO_x$, where x is, for example, $0.8 \leq x \leq 1.6$. $SiO_x$ is obtained, for example, by heat-treating silicon monoxide and separating it into a $SiO_2$ phase and a fine Si phase by disproportionation.

The lithium silicate phase may have, for example, a composition represented by the formula:$Li_{2z}SiO_{2+z}$ ($0 < z < 2$). z may be 1/2 or may be 1. The composite particles in which silicon particles are dispersed in a silicate phase can be obtained, for example, by pulverizing a mixture of silicate and a raw material silicon with stirring in a ball mill or the like to make fine particles, and then subjecting the mixture to heat treatment in an inert atmosphere. The carbon phase includes, for example, amorphous carbon which is less crystalline.

In view of improving conductivity, at least a part of the surfaces of composite particles may be coated with a conductive layer. The conductive layer includes a conductive material such as conductive carbon. The conductive layer is coated, for example, in an amount of 1 part by mass or more and 10 parts by mass or less per 100 parts by mass of a total of the composite particles and the conductive layer. The composite particles having a conductive layer on their surfaces are obtained, for example, by mixing coal-pitch or the like with the composite particles and heat-treating the mixture in an inert atmosphere.

While Si-based particles have a larger capacity than graphite particles, Si-based particles have a larger degree of expansion and contraction during charging and discharging. On the other hand, the graphite particles A are hard and hard to crack. Therefore, when the Si-based particles are contracted by discharge, a gap is easily formed between the graphite particles A and the Si-based particles. When the Si-based particles are used for the negative electrode active material, it is easy to increase the interparticle porosity by containing a larger amount of graphite particles A in the first region than in the second region. When graphite particles and Si-based particles are used in combination, the ratio of the Si-based particles to the negative electrode active material (the sum of graphite particles and Si-based particles) is preferably 1 mass% or more and 10 mass% or less, and more preferably 3 mass% or more and 7 mass% or less. In this case, it is easy to achieve improvement in cycle characteristics and high capacity in a well-balanced manner.

Examples of the binder include resin materials; fluorine resins, such as polytetrafluoroethylene and polyvinylidene fluoride (PVDF); polyolefin resins, such as polyethylene and polypropylene; polyamide resins, such as aramid resins; polyimide resins, such as polyimide and polyamideimide; acrylic resins, such as polyacrylic acid, methyl polyacrylate, and ethylene-acrylic acid copolymers; vinyl resins, such as polyacrylonitrile and polyvinyl acetate; polyvinylpyrrolidone; polyethersulfone; rubbery materials, such as styrene-butadiene copolymer rubber (SBR), and the like. A kind of binder may be used singly, or two or more kinds thereof may be used in combination.

Examples of the conductive agent include carbons such as acetylene black, conductive fibers such as carbon fibers and metal fibers, and powders of metal such as aluminum. A kind of conductive agent may be used singly, or two or more kinds thereof may be used in combination.

Examples of the thickener include carboxy methylcellulose (CMC) and a modified product thereof (also including salts such as Na salts), a cellulose derivative such as methylcellulose (such as cellulose Ether), and a saponified product of a polymer having a vinyl acetate unit such as polyvinyl alcohol. A kind of thickener may be used singly, or two or more kinds thereof may be used in combination.

The dispersion medium is not particularly limited, and for example, water, an alcohol such as ethanol, ether such as tetrahydrofuran, an amide such as dimethylformamide, N-methyl-2-pyrrolidone (NMP), or a mixture solvent thereof is used.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified. The thickness

of the negative electrode current collector is not particularly limited, but is preferably 1 to 50 μm, more preferably 5 to 20 μm.

[Positive Electrode]

The positive electrode includes, for example, a positive electrode current collector, and a positive electrode mixture layer supported by the surface of the positive electrode current collector. The positive electrode mixture layer can be formed, for example, by applying a positive electrode slurry in which a positive electrode mixture is dispersed in a dispersion medium on a surface of the positive electrode current collector and drying the slurry. The dried coating film may be rolled, if necessary. The positive electrode mixture layers may be formed on one or both surfaces of the sheet-form positive electrode current collector. The positive electrode mixture contains a positive electrode active material as an essential component, and may contain a binder, a conductive agent, and the like as an optional component. As a dispersing medium for the positive electrode slurry, NMP or the like is used.

For the positive electrode active material, for example, a composite oxide containing lithium and a transition metal such as Ni, Co, and Mn can be used. For example, $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}MbO_c$, $Li_aMn_2O_4$, $Li_aMn_{2-b}MbO_4$, $LiMPO_4$, and $Li_2MPO_4F$ (M is at least one selected from the group consisting of Na, Mg, Sc, Y, Mn, Fe, Co, Ni, Cu, Zn, Al, Cr, Pb, Sb, and B) are exemplified. Here, $0 < a \leq 1.2$, $0 < b \leq 0.9$, $2.0 \leq c$ 2.3. Note that the value "a" indicating the molar ratio of lithium is increased or decreased by charging and discharging.

Among them, a lithium-nickel composite oxide represented by $Li_aNi_bMe_{1-b}O_2$ (Me is at least one selected from the group consisting of Mn, Co, and Al, $0 < a \leq 1.2$, and $0.3 \leq b \leq 1$) is preferable. In view of increasing the capacity, it is more preferable to satisfy $0.85 \leq b \leq 1$. In view of stabilization of the crystalline structure, $Li_aNi_bCo_cAl_dO_2$ containing Co and Al as Me ($0 < a \leq 1.2$, $0.85 \leq b < 1$, $0 < c < 0.15$, $0 < d \leq 0.1$, $b + c + d = 1$) is more preferable.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material for the positive electrode current collector include stainless steel, aluminum, aluminum alloy, titanium or the like.

[Nonaqueous electrolyte]

The nonaqueous electrolyte includes a nonaqueous solvent and a lithium salt dissolved in the nonaqueous solvent. The nonaqueous solvent includes at least one additive selected from the group consisting of a sulfite compound and a sulfate compound.

As the nonaqueous solvent, for example, a cyclic carbonic acid ester, a chain carbonic acid ester, a cyclic carboxylic acid ester, a chain carboxylic acid ester, or the like is used. Examples of the cyclic carbonic acid ester include propylene carbonate (PC), ethylene carbonate (EC), and the like. A cyclic carbonic acid ester having an unsaturated bond such as vinylene carbonate (VC) may also be used. A cyclic carbonic acid ester having a fluorine atom such as fluoroethylene carbonate (FEC) may also be used. Examples of the chain carbonic acid ester include diethyl carbonate (DEC), ethyl methyl carbonate (EMC), dimethyl carbonate (DMC), and the like. Examples of the cyclic carboxylic acid ester include y -butyrolactone (GBL) and $\gamma$-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. A kind of nonaqueous solvent may be used singly, or two or more kinds thereof may be used in combination.

Examples of the lithium-salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylates, LiCl, LiBr, LiI, borates, and imide salts. Examples of the borates include bis(1,2-benzenediolate (2-)-0, O' ) lithium borate, bis(2,3-naphthalenediolate (2-)-O, O') lithium borate, bis(2,2'-biphenyldiolate (2-)-0, O') lithium borate, and bis(5-fluoro-2-olate-1-benzenesulfonic acid-O, O') lithium borate. Examples of the imide salts include bisfluorosulfonyl imide lithium ($LiN(FSO_2)_2$), bistrifluoromethane sulfonate imide lithium ($LiN(CF_3SO_2)_2$), trifluoromethane sulfonate nonafluorobutane sulfonate imide lithium ($LiN(CF_3SO_2)(C_4F_9SO_2)$), bispentafluoroethane sulphonate imide lithium ($LiN(C_2F_5SO_2)_2$) and the like. A kind of lithium salt may be used singly, or two or more kinds thereof may be used in combination. The concentration of lithium salt in the nonaqueous electrolyte is, for example, 0.5 mol/L or more and 2 mol/L or less.

[Separator]

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin such as polypropylene and polyethylene.

In an example structure of the nonaqueous electrolyte secondary battery, an electrode group and a nonaqueous electrolyte are accommodated in an outer package, the electrode group having a positive electrode and a negative electrode wound with a separator. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary battery may be in any form, e.g., cylindrical, prism-shaped, coin-shaped, button-shaped, laminated, etc.

FIG. 3 is a schematic perspective partially cutaway view of a nonaqueous electrolyte secondary battery according to an embodiment of the present disclosure.

The battery includes a bottomed rectangular battery case 4 and an electrode group 1 and a nonaqueous electrolyte housed in the battery case 4. The nonaqueous electrolyte includes at least one additive selected from the group consisting of a sulfite compound and a sulfate compound. The electrode group 1 has a negative electrode in the form of a long strip, a positive electrode in the form of a long strip, and a separator interposed therebetween for preventing direct contact therebetween. The electrode group 1 is formed by winding the negative electrode, the positive electrode, and the separator around a flat core and removing the core.

One end of the negative electrode lead 3 is attached to the negative electrode current collector of the negative electrode by welding or the like. The other end of the negative electrode lead 3 is electrically connected to the negative electrode terminal 6 provided in a sealing plate 5 with a resin-made insulating plate. The negative electrode terminal 6 is insulated from the sealing plate 5 by a resin gasket 7. One end of the positive electrode lead 2 is attached to the positive electrode current collector of the positive electrode by welding or the like. The other end of the positive electrode lead 2 is connected to the back surface of the sealing plate 5 via an insulating plate. That is, the positive electrode lead 2 is electrically connected to the battery case 4 which also serves as the positive electrode terminal. The insulating plate separates the electrode group 1 and the sealing plate 5 and separates the negative electrode lead 3 and the battery case 4. Periphery of the sealing plate 5 is fitted to the open end of the battery case 4, and the fitting portion is laser welded. In this manner, the opening of the battery case 4 is sealed by the sealing plate 5. The injection hole for the nonaqueous electrolyte provided in the sealing plate 5 is plugged with a sealing plug 8.

FIG. 4 is a schematic cross-sectional view schematically showing a negative electrode used in the nonaqueous electrolyte secondary battery of FIG. 3.

The negative electrode has a sheet-form negative electrode current collector 11 and a negative electrode active material layer 12 having a thickness T formed on both sides of the negative electrode current collector 11. The negative electrode active material layer 12 is divided into two layers of a first region 12a and a second region 12b having the same thickness, and the second region 12b is closer to the negative electrode current collector than the first region 12a. That is, the first region and the second region each has a thickness of T/2. The first region 12a is a region of a half of the negative electrode active material layer 12 on an opposite side the negative electrode current collector 11 (negative electrode surface side), and the second region 12b is a region of a half of the negative electrode active material layer 12 on the negative electrode current collector 11 side. The first region 12a and the second region 12b contain graphite particles. The ratio P1/P2 of the interparticle porosity PI of the first region 12a to the interparticle porosity P2 of the second region 12 b is greater than 1.

The present invention will be described in detail below with reference to Examples and Comparative Examples. The present invention, however, is not limited to the following Examples.

<Example 1>

[Preparation of graphite particles A]

Coke (precursor) serving as a main raw material was pulverized to obtain a pulverized product having an average particle size (D50) of 12 μm. A pitch was added as a binder to the pulverized product to aggregate the pulverized product, thereby obtaining aggregates having an average particle size (D50) of 18 μm. The aggregates are calcined at a temperature of 2800°C, and graphitized. The obtained graphitized material was sieved to obtain graphite particles A having an average particle size (D50) of 23 μm.

[Preparation of graphite particles B]

Coke (precursor) serving as a main raw material was pulverized to obtain a pulverized product having an average particle size (D50) of 15 μm. A pitch was added as a binder to the pulverized product to aggregate the pulverized product, and the obtained aggregates were pressure-molded to obtain a block-shaped compact having a density of 1.6 $g/cm^3$ to 1.9 $g/cm^3$. The obtained block-formed compact was fired at a temperature of 2800 °C. and graphitized. The obtained block-formed graphitized material was pulverized and sieved to obtain graphite particles B having an average particle size (D50) of 23 μm.

The inner porosity of the graphite particles A was 3%. The inner porosity of the graphite particles B was 15%. The adjustment of the inner porosity of the graphite particles A and B was performed by the amount of pitch added in the process of manufacturing the graphite particles A and B. The larger the pitch amount, the larger the porosity in the particles.

[Preparation of first negative electrode slurry]

An appropriate amount of water was added to a first negative electrode mixture to obtain a first negative electrode slurry. For the first negative electrode mixture, a mixture of a first negative electrode active material, a styrene-butadiene copolymer rubber (SBR) as a binder, and carboxy methylcellulose (CMC) as a thickener was used. For the first negative electrode active material, a mixture of graphite particles A and Si-based particles was used. In the first negative electrode active material, the mass ratio of graphite particles A to Si-based particles was set to 95:5. The mass ratio between the first negative electrode active material, SBR, and CMC was set to 100:1:1. For the Si-based particles, $SiO_x$ particles ($0.8 \leq x \leq 1.6$, average particle size (D50) of 5 $\mu$m) whose surfaces were coated with conductive layers containing conductive carbons were used as composite particles. The composite material surface was coated with the conductive layer in an amount of 5 parts by mass per 100 parts by mass of the $SiO_x$ particles and the conductive layer in total.

[Preparation of second negative electrode slurry]

An appropriate amount of water was added to a second negative electrode mixture to obtain a second negative electrode slurry. The mass ratio of the second negative electrode mixture in the second negative electrode slurry and the mass ratio of the first negative electrode mixture in the first negative electrode slurry were the same. For the second negative electrode mixture, a mixture of a second negative electrode active material, SBR, and CMC was used. For the second negative electrode active material, a mixture of graphite particles B and Si-based particles was used. In the second negative electrode active material, the mass ratio of graphite particles B to Si-based particles was set to 95:5. The mass ratio between the second negative electrode active material, SBR, and CMC was set to 100:1:1. As the Si-based particles, the same $SiO_x$ particles as described above were used.

[Negative Electrode Production]

The second negative electrode slurry was applied to both sides of a copper foil (thickness 10 $\mu$m) as a negative electrode current collector, and the second coating film was dried. Further, the first negative electrode slurry was applied on the second coating film formed on both surfaces of the copper foil, and the first coating film was dried. A doctor blade method was used to apply the first negative electrode slurry and the second negative electrode slurry. The amount of coating per unit area of the first negative electrode slurry and the second negative electrode slurry was set to be the same. The amount of the negative electrode slurry coated refers to the mass of the negative electrode slurry applied per unit area of the negative electrode current collector.

The laminate of the second coating film and the first coating film after drying was rolled, and the second negative electrode active material layer (thickness: 50 $\mu$m, packing density: 1.5 g/cm$^3$) and the first negative electrode active material layer (thickness: 50 $\mu$m, packing density: 1.5 g/cm$^3$) were formed on both surfaces of the negative electrode current collector in this order. In this way, the negative electrode was obtained. The thicknesses of the first negative electrode active material layer and the second negative electrode active material layer are the same, and the first negative electrode active material layer corresponds to the first region and the second negative electrode active material layer corresponds to the second region. The first negative electrode active material layer includes the first negative electrode active material (graphite particles A and $SiO_x$ particles) and the second negative electrode active material layer includes the second negative electrode active material (graphite particles B and $SiO_x$ particles).

[Positive Electrode Production]

An appropriate amount of N-methyl-2-pyrrolidone (NMP) was added to the positive electrode mixture to obtain a positive electrode slurry.

For the positive electrode mixture, a mixture of a lithium-containing composite oxide as a positive electrode active material, graphite as a conductive agent, and polyvinylidene fluoride (PVDF) as a binder was used. $LiNi_{0.88}Co_{0.09}Al_{0.03}O_2$ was used as the lithium-containing composite oxide. In the positive electrode mixture, the mass ratio between the lithium-containing composite oxide, graphite, and PVDF was set to 100:1:0.9.

A positive electrode slurry was applied to both surfaces of an aluminum foil (thickness: 15 $\mu$m) as a current collector, and the coating film was dried and rolled to form a positive electrode active material layer (density: 3.6 g/cm$^3$)

to obtain a positive electrode. A doctor blade method was used to apply the positive electrode slurry.

[Nonaqueous Electrolyte Preparation]

A nonaqueous electrolyte was prepared by adding ethylene sulfite (ES) as a sulfite compound and vinylene carbonate (VC) to a nonaqueous solvent obtained by mixing ethylene carbonate (EC) and dimethyl carbonate (DMC) in a volume ratio of 1:3, and dissolving $LiPF_6$. The nonaqueous electrolyte contained 1 mass% of ES relative to the entire nonaqueous electrolyte. The nonaqueous electrolyte contained 5 mass% of VC relative to the entire nonaqueous electrolyte. The nonaqueous electrolyte had a $LiPF_6$ concentration of 1.5 mol/L.

[Nonaqueous Electrolyte Secondary Battery Production]

An aluminum positive electrode lead was attached to the exposed part of the positive electrode current collector of the positive electrode, and a nickel-made negative electrode lead was attached to the exposed part of the negative electrode current collector of the negative electrode. Thereafter, the positive electrode and the negative electrode were wound with a separator interposed to produce an electrode group of the winding type. A microporous membrane made of polyethylene was used as the separator. The electrode group was placed in a battery case. At this time, on the top and bottom of the electrode group, an upper insulating plate and a lower insulating plate made of resin were arranged, respectively. A negative electrode lead was welded to the inner bottom surface of a battery case. A positive electrode lead was welded to a metallic sealing member which also serves as a positive electrode terminal. Thereafter, the nonaqueous electrolyte was injected into the battery case, and the opening of the battery case was closed using the sealing member. At this time, a resin-made gasket was interposed between the open end of the battery case and the sealing member. In this way, a cylindrical nonaqueous electrolyte secondary battery (nominal capacity of 4600 mAh) was obtained.

The battery produced above were evaluated as below.

[Evaluation 1: Measuring capacity retention rates A and B at Low-Rate Cycles]

Under an environment of 25°C, after performing constant current charging at a current of 0.3 C (1380 mA) until the voltage was 4.2 V, constant voltage charging was performed at a voltage of 4.2 V until the current was 0.02 C. After a 10 minute pause, constant current discharge was performed at a current of 0.5 C until the voltage was 2.5 V. Setting the above as one cycle, a set of charge and discharge was performed 200 cycles, and the discharge capacity of the first cycle, the 20th cycle, and the 200th cycle was determined. The capacity retention rate A (%) at 20th cycle was determined based on the following formula and the initial cycle characteristics were evaluated.

$$\text{Capacity retention rate A} = (\text{Discharge capacity of the 20th cycle}/\text{Discharge capacity of the 1st cycle}) \times 100$$

The capacity retention rate B (%) at the 200th cycle was obtained based on the following formula, and the mid-term cycle characteristics were evaluated.

$$\text{Capacity retention rate B} = (\text{discharge capacity at the 200th cycle}/\text{discharge capacity at the 1st cycle}) \times 100$$

In addition, the battery produced above was separately prepared, and charging and discharging of Evaluation 1 were performed for 20 cycles. Thereafter, the negative electrode was taken out from the battery, and the ratio P1/P2 of the interparticle porosity PI of the first region to the interparticle porosity P2 of the second region was determined by the above-described methods. P1/P2 was 1.2.

[Evaluation 2: Measuring capacity retention rate C at High Rate Cycles]

Under an environment of 25 °C, after performing constant current charging at a current of 0.7 C (3220 mA)

until the voltage was 4.2 V, constant voltage charging was performed at a voltage of 4.2 V until the current was 0.02 C. After a 10 minute pause, constant current discharge was performed at a current of 0.5 C until the voltage was 2.5 V. Setting the above as one cycle, a set of charge and discharge was performed 50 cycles. Capacity retention rate C (%) was determined based on the following formula to evaluate the high rate characteristics.

$$\text{Capacity retention rate C} = (\text{Discharge capacity at 50th cycle}/\text{Discharge capacity at 1st cycle}) \times 100$$

<Example 2>

A nonaqueous electrolyte secondary battery was produced and evaluated in the same manner as in Example 1, except that ethylene sulfate (DTD) was used as the sulfate compound instead of ES.

<Example 3>

A nonaqueous electrolyte secondary battery was produced and evaluated in the same manner as in Example 1, except that the ES content in the nonaqueous electrolyte was set to 0.5 mass% relative to the entire nonaqueous electrolyte.

<Comparative Example 1>

A negative electrode slurry was applied on both surfaces of the negative electrode current collector, and the coating film was dried and rolled to form a negative electrode active material layer on both surfaces of the negative electrode current collector to obtain a negative electrode. Only the second negative electrode slurry was used for the negative electrode slurry, and the negative electrode active material layer was composed only of the second negative electrode active material layer. The coating amount of the negative electrode slurry was set to be the same as the coating amount of a sum of the first negative electrode slurry and the second negative electrode slurry of Example 1. The thickness of the negative electrode active material layer was set to be the same as the thickness of a sum of the first negative electrode active material layer and the second negative electrode active material layer of Example 1.
Furthermore, the nonaqueous electrolyte did not contain ES.
Except for the above, a nonaqueous electrolyte secondary battery was produced and evaluated in the same manner as in Example 1.

<Comparative Example 2>

A nonaqueous electrolyte secondary battery was produced and evaluated in the same manner as in Example 1, except that the negative electrode of Comparative Example 1 in which the negative electrode active material layer was composed only of the second negative electrode active material layer was used.

<Comparative Example 3>

A nonaqueous electrolyte secondary battery was produced and evaluated in the same manner as in Example 1, except that the nonaqueous electrolyte contained no ES.
The evaluation results are shown in Table 1.

[Table 1]

| | Negative Electrode | | Nonaqueous Electrolyte | | Evaluation on Initial Cycle Characteristics | Evaluation on Mid Cycle Characteristics | Evaluation on High Rate Characteristics |
|---|---|---|---|---|---|---|---|
| | Negative Electrode Active Material Layer | P1/P2 | Additive | Additive Content (mass%) | 20th Cycle Capacity Retention Rate A (%) | 200th Cycle Capacity Retention Rate B (%) | Capacity Retention Rate C (%) |
| Comp. Ex.1 | One Layer | 1 | - | - | 98. 2 | 84. 5 | 88. 8 |
| Comp. Ex.2 | One Layer | 1 | ES | 1 | 98. 4 | 85. 3 | 87. 2 |
| Comp. Ex.3 | Two Layers | 1. 2 | - | - | 98. 0 | 86. 2 | 94. 0 |
| Example 1 | Two Layers | 1. 2 | ES | 1 | 98. 8 | 88. 3 | 95. 0 |
| Example 2 | Two Layers | 1. 2 | DTD | 1 | 98. 7 | 88. 1 | 94. 8 |
| Example 3 | Two Layers | 1. 2 | ES | 0. 5 | 98. 8 | 88. 2 | 94. 9 |

Regarding the batteries of Examples 1 and 3, P1/P2 was greater than 1, and the nonaqueous electrolyte contained ES as the sulfite compound, and initial cycle characteristics and high rate characteristics improved.

Regarding the battery of Example 2, P1/P2 was greater than 1, and the nonaqueous electrolyte contained DTD as the sulfate compound, and initial cycle characteristics and high rate characteristics improved. The mid-term cycle characteristics were also improved in the batteries of Examples 1 to 3.

Regarding the batteries of Comparative Examples 1 and 2, the negative electrode active material layer was composed of one layer, and therefore P1/P2 was 1 and the high rate characteristics lowered. In the batteries of Comparative Example 3, in which the negative electrode active material layer was composed of two layers, the high rate characteristics were improved compared with the batteries of Comparative Example 1, but the initial-cycle characteristics were lowered compared with the battery of Comparative Example 1 because the nonaqueous electrolyte contained no additive.

[Industrial Applicability]

The nonaqueous electrolyte secondary battery according to the present disclosure is suitably used, for example, in applications in which excellent initial cycle characteristics and high rate characteristics are required.

[Reference Signs List]

1 Electrode group
2 Positive electrode lead
3 Negative electrode lead
4 Battery case
5 Sealing plate
6 Negative electrode terminal
7 Gasket
8 Sealing plug
11 Negative electrode current collector
12 Negative electrode active material layer
12a first region

12b second region
20 Graphite particle
21 Internal void
22 External void
30 Negative electrode active material layer
31 Negative electrode active material particles
32 Voids between negative electrode active material particles
33 Internal void
34 External void

## Claims

**1.** A nonaqueous electrolyte secondary battery comprising a positive electrode, a negative electrode, and a nonaqueous electrolyte, wherein

the negative electrode comprises a negative electrode current collector and a negative electrode active material layer supported by the negative electrode current collector,
when dividing the negative electrode active material layer into two layers of a first region and a second region having a same thickness, the second region is closer to the negative electrode current collector than the first region,
the first region and the second region each contains graphite particles,
a ratio P1/P2 of interparticle porosity PI of the first region to interparticle porosity P2 of the second region is greater than 1, and
the nonaqueous electrolyte includes at least one additive selected from the group consisting of a sulfite compound and a sulfate compound.

**2.** The nonaqueous electrolyte secondary battery of claim 1, wherein the P1/P2 is 1.1 or more and 2.0 or less.

**3.** The nonaqueous electrolyte secondary battery of claim 1 or 2, wherein a ratio D1/D2 of packing density D1 of the first region to packing density D2 of the second region is 0.9 or more and 1.1 or less.

**4.** The nonaqueous electrolyte secondary battery of any one of claims 1 to 3, wherein the first region and the second region each has a packing density of 1.3 $g/cm^3$ or more and 2.0 $g/cm^3$ or less.

**5.** The nonaqueous electrolyte secondary battery of any one of claims 1 to 4, wherein the graphite particles include graphite particles A and graphite particles B,

an inner porosity of the graphite particles A is 5% or less,
an inner porosity of the graphite particles B is more than 5%, and
the graphite particles A are contained more in the first region than in the second region.

**6.** The nonaqueous electrolyte secondary battery of any one of claims 1 to 5, wherein the first region and the second region each includes Si-based particles.

**7.** The nonaqueous electrolyte secondary battery of any one of claims 1 to 6, wherein the additive includes at least one selected from the group consisting of ethylene sulfite and ethylene sulfate.

**8.** The nonaqueous electrolyte secondary battery of any one of claims 1 to 7, wherein a content of the additive in the nonaqueous electrolyte is 0.5 mass% or more and 2 mass% or less relative to the entire nonaqueous electrolyte.

[FIG. 1]

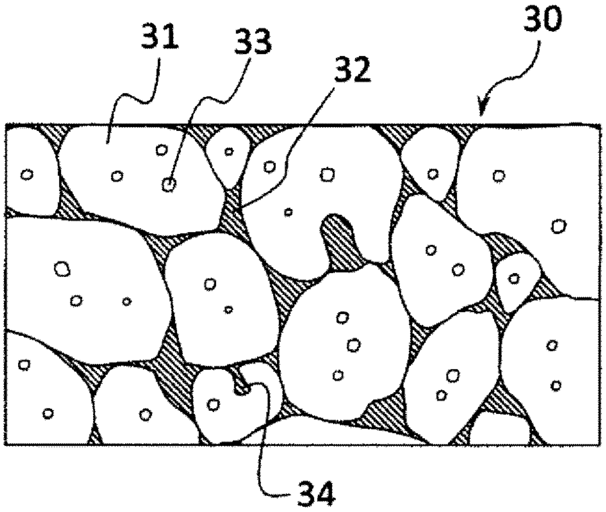


[FIG. 2]

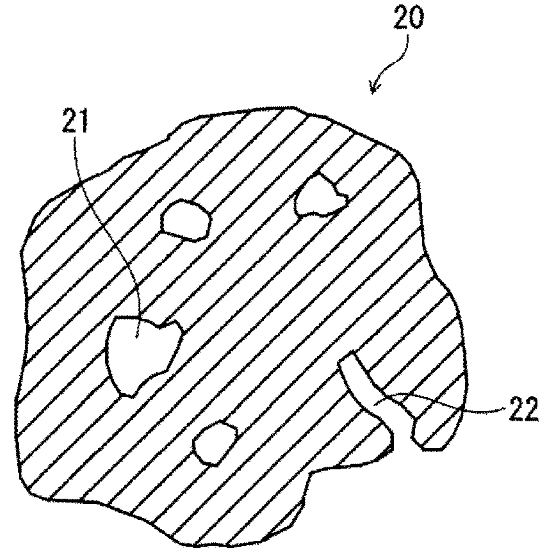


[FIG. 3]

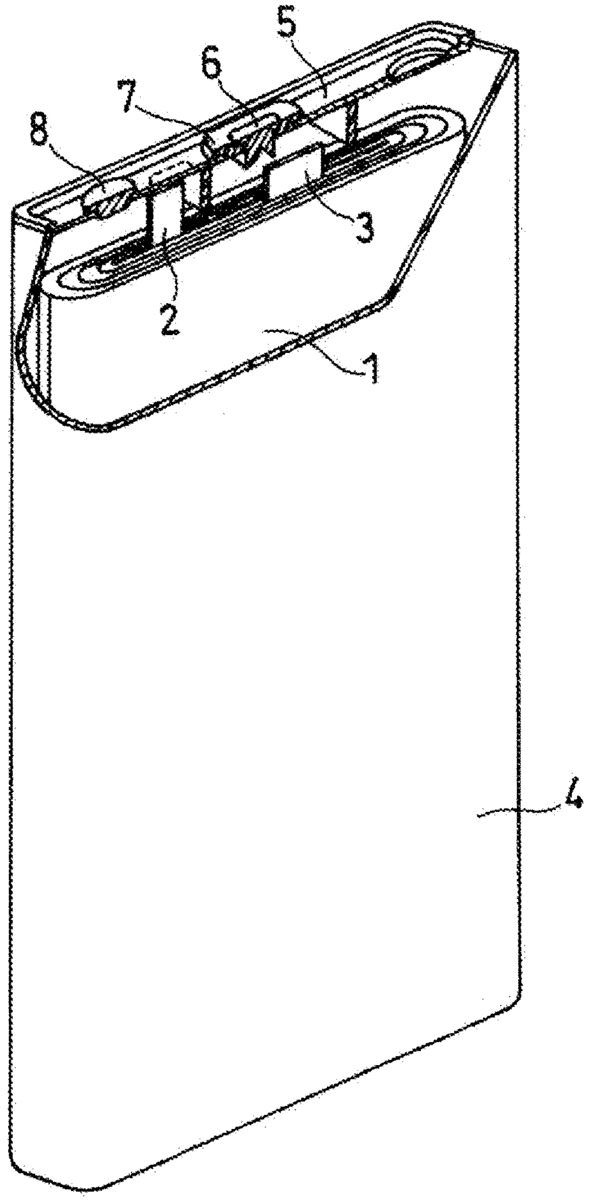


[FIG. 4]

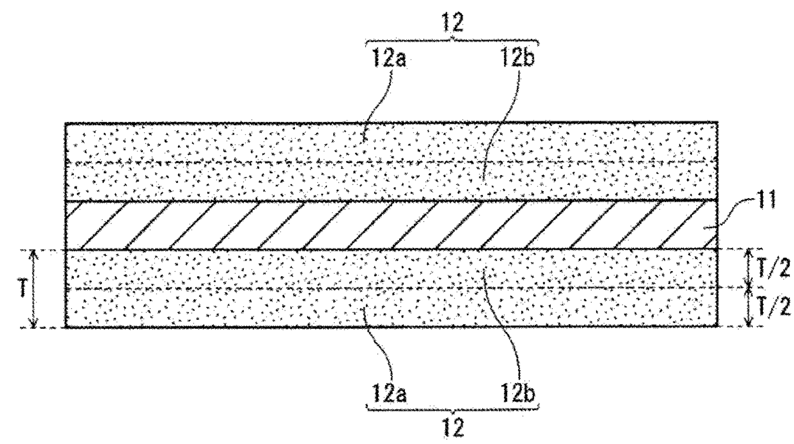

**INTERNATIONAL SEARCH REPORT**

International application No. PCT/JP2020/044688

A. CLASSIFICATION OF SUBJECT MATTER
H01M 4/133(2010.01)i; H01M 4/36(2006.01)i; H01M 4/38(2006.01)i; H01M 4/587(2010.01)i; H01M 10/052(2010.01)i; H01M 10/0567(2010.01)i
FI: H01M10/052; H01M10/0567; H01M4/587; H01M4/133; H01M4/36 D; H01M4/38 Z; H01M4/36 E

According to International Patent Classification (IPC) or to both national classification and IPC

B. FIELDS SEARCHED

Minimum documentation searched (classification system followed by classification symbols)
H01M4/133; H01M4/36; H01M4/38; H01M4/587; H01M10/052; H01M10/0567

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-214038 A (TOYOTA MOTOR CORP.) 23 August 2007 (2007-08-23) claims, paragraphs [0005], [0014], [0024] | 1-4, 6-8<br>5 |
| Y | JP 11-73990 A (BESENHARD JURGEN OTTO) 16 March 1999 (1999-03-16) claims, paragraphs [0005], [0014], [0024] | 1-4, 6-7 |
| Y | JP 2000-82492 A (UBE INDUSTRIES, LTD.) 21 March 2000 (2000-03-21) claims, paragraphs [0009], [0018] | 1-4, 6, 8 |
| Y | WO 2016/035289 A1 (SANYO ELECTRIC CO., LTD.) 10 March 2016 (2016-03-10) paragraph [0021] | 6 |
| A | JP 2014-67638 A (MITSUBISHI CHEMICAL CORP.) 17 April 2014 (2014-04-17) claims | 5 |
| A | JP 2019-175712 A (SAMSUNG SDI CO., LTD.) 10 October 2019 (2019-10-10) claims | 5 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>29 January 2021 (29.01.2021) | Date of mailing of the international search report<br>09 February 2021 (09.02.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/044688

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-523912 A (LG CHEM, LTD.) 23 August 2018 (2018-08-23) claims | 5 |

Form PCT/ISA/210 (continuation of second sheet) (January 2015)

**INTERNATIONAL SEARCH REPORT**
Information on patent family members

International application no.
PCT/JP2020/044688

| Patent Documents referred in the Report | Publication Date | Patent Family | Publication Date |
|---|---|---|---|
| JP 2007-214038 A | 23 Aug. 2007 | (Family: none) | |
| JP 11-73990 A | 16 Mar. 1999 | (Family: none) | |
| JP 2000-82492 A | 21 Mar. 2000 | (Family: none) | |
| WO 2016/035289 A1 | 10 Mar. 2016 | US 2017/0125806 A1 paragraph [0025]<br>CN 106797020 A | |
| JP 2014-67638 A | 17 Apr. 2014 | (Family: none) | |
| JP 2019-175712 A | 10 Oct. 2019 | KR 10-2019-0113541 A | |
| JP 2018-523912 A | 23 Aug. 2018 | US 2018/0190985 A1 claims<br>WO 2017/111542 A1<br>EP 3297073 A1<br>KR 10-2017-0075661 A<br>CN 107851795 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015037008 A